Europäisches Patentamt

European Patent Office

Office européen des brevets

(19)

(11) Numéro de publication : **0 040 131**
**B1**

(12) **FASCICULE DE BREVET EUROPÉEN**

(45) Date de publication du fascicule du brevet :
24.04.85

(51) Int. Cl.⁴ : **C 08 G 18/54, C 08 G 18/40**

(21) Numéro de dépôt : 81400683.9

(22) Date de dépôt : 30.04.81

(54) **Procédé de fabrication de mousses souples de polyuréthane de haute fermeté à partir de résines hydroxylées à base de condensats cétone-formaldéhyde.**

(30) Priorité : 08.05.80 FR 8010230

(43) Date de publication de la demande :
18.11.81 Bulletin 81/46

(45) Mention de la délivrance du brevet :
24.04.85 Bulletin 85/17

(84) Etats contractants désignés :
AT BE CH DE FR GB IT LI LU NL SE

(56) Documents cités :
FR-A- 2 156 428
GB-A- 1 182 884
GB-A- 1 379 727
SU-A-   298 619
CHEMICAL ABSTRACTS, vol. 92, no. 6, 11 février
1980, page 55, no. 43147v Columbus, Ohio, U.S.A.

(73) Titulaire : **ATLANTIC RICHFIELD COMPANY**
**515 South Flower Street**
**Los Angeles California 90071 (US)**

(72) Inventeur : **Moisan, Roger**
**9 Quartier Font Sarade**
**F-13500 Martigues (FR)**
Inventeur : **Lieux, Georges**
**Lotissement Le Mât Saint-Jean Villa No 22**
**Croix Sainte F-13500 Martigues (FR)**
Inventeur : **Gibler-Rambaud, Alain**
**62 Cours Pierre Puget**
**F-13600 Marseille (FR)**

(74) Mandataire : **Corre, Jacques Denis Paul et al**
**Cabinet Regimbeau 26, Avenue Kléber**
**F-75116 Paris (FR)**

## Description

L'invention a pour objet un procédé de fabrication de mousses souples de polyuréthane de haute fermeté à partir de polyisocyanates organiques, de polyéthers-polyols et de résines hydroxylées à base de condensats cétone-formaldéhyde. Elle a également pour objet les mousses ainsi obtenues dont les propriétés de fermeté, d'allongement à la rupture et de résistance à la déchirure sont améliorées.

Les mousses souples de haute fermeté sont également appelées mousses souples de haute portance. Cette propriété est déterminée d'après le tracé de la courbe de déformation de la mousse en fonction de la charge qui lui est appliquée, dans les conditions définies par la norme AFNOR 56110.

Il est connu de fabriquer des mousses souples de polyuréthane à partir de polyisocyanates organiques et de polyéthers-polyols obtenus par polyaddition d'oxyde de propylène et d'oxyde d'éthylène sur de l'eau ou sur des polyols, ces polyéthers-polyols possédant généralement un indice d'hydroxyle ($I_{OH}$) compris entre 20 et 60, l'indice d'hydroxyle ($I_{OH}$) d'un composé hydroxylé, en particulier d'un polyéther-polyol étant, mesuré suivant la norme AFNOR NFT 62112, le nombre de mg de potasse qu'il faut pour neutraliser la quantité d'acide phtalique qui se combine par estérification à 1 g de ce composé hydroxylé ou de ce polyéther-polyol.

Le mélange réactionnel à partir duquel ces mousses souples sont généralement formées contient également des agents moussants constitués par des liquides volatils et/ou par de l'eau, des catalyseurs tels que des amines tertiaires, ainsi que des composés tensio-actifs.

Afin d'obtenir des mousses souples de haute fermeté, on est conduit à choisir des mousses de densité relativement élevée, de manière à atteindre les propriétés recherchées ; l'augmentation de la densité accroît cependant le prix de revient des mousses et constitue donc un élément défavorable du point de vue économique.

Afin d'augmenter la fermeté des mousses on a proposé d'ajouter aux polyéthers-polyols utilisés, des rétifiants constitués de composés de poids moléculaire assez faible, possédant des fonctions réactives vis-à-vis des groupements isocyanates. Ces réticulants peuvent posséder soit des fonctions amines, soit des fonctions alcools, soit les deux. Lorsqu'on emploie ces rétifiants à des doses suffisantes pour obtenir une mousse de fermeté recherchée, on observe une augmentation de la densité de la mousse, proportionnelle au taux de rétifiant utilisé. De plus, les autres propriétés mécaniques de la mousse souple sont dégradées par l'addition de rétifiants : on observe, en générale, une nette diminution de l'allongement à la rupture, de la résistance à la déchirure et de la tenue de la mousse sous charge constante.

Il est également connu, afin d'accroître la fermeté des mousses souples de polyuréthane, d'utiliser des polyisocyanates organiques, notamment des polyisocyanates comportant plus de deux groupements isocyanates NCO par molécule, en quantités telles que le nombre de groupements isocyanates mis en œuvre soit supérieur de 10 à 30 % à celui de groupements hydroxyles des polyéthers-polyols. Cet artifice est d'une utilisation délicate, car les mélanges réactionnels à partir desquels les mousses sont alors formées sont difficiles à mettre en œuvre et il entraîne en même temps qu'une augmentation de la rigidité, une notable détérioration des autres propriétés mécaniques.

Par ailleurs le brevet SU-A-298 619 décrit l'utilisation de composés polyhydroxylés constitués par des condensats de l'acétone et du formaldéhyde dans la fabrication de mousses rigides de polyuréthane ; selon ce document, lesdits condensats, qui sont des liquides visqueux, sont utilisés comme seuls composés polyhydroxylés ou en mélange équipondéral avec un autre composé hydroxylé.

Le brevet FR-A-2 156 428 décrit l'utilisation de condensats ternaires cétone aliphatique/formaldéhyde/alcanolamine dans la préparation de mousses rigides de polyuréthane.

Enfin des condensats de cyclohexanone et de formaldéhyde ont également été utilisés pour la fabrication d'élastomères polyuréthane fortement réticulés (PL-A-100 965 — Chemical Abstracts Vol. 92-1980-92 : 43147 v).

Il a maintenant été trouvé, que l'addition de résines hydroxylées à base de condensats cétone-formaldéhyde aux compositions moussantes pour mousses souples de polyuréthane permet de fabriquer des mousses souples de polyuréthane dont à la fois la fermeté, la résistance à la déchirure et l'allongement à la rupture sont sensiblement plus élevés que ceux des mousses de même densité préparées en l'absence de telles résines. Il est également possible de fabriquer, selon le procédé de l'invention, des mousses de polyuréthane allégées qui possèdent de bonnes propriétés mécaniques, en particulier une bonne résistance à la déchirure.

Les résines hydroxylées utilisées dans l'invention présentent divers avantages, en particulier celui d'être réactives vis-à-vis des polyisocyanates puisqu'elles contiennent des groupements OH et celui d'être solubles, au moins en certaines proportions, dans les polyéthers-polyols utilisés normalement pour la fabrication des mousses de polyuréthane. L'utilisation de ces résines permet également, dans la fabrication des mousses souples de polyuréthane moulées, de réduire les quantités d'agents de démoulage utilisés pour empêcher l'adhérence de la mousse au moule et faciliter ainsi l'extraction de la pièce moulée. Cette propriété de la mousse est d'un grand intérêt pratique car elle permet de diminuer de moitié environ la fréquence d'enduction du moule par pistolage ou la quantité de l'agent de démoulage utilisé ; il est possible, en particulier, lorsque le moulage est effectué dans des moules en matière

2

plastique telle qu'une résine polyester ou une résine époxy, de fabriquer consécutivement plusieurs dizaines de pièces moulées entre deux applications successives de l'agent de démoulage.

L'invention a donc pour objet un procédé de fabrication de mousses souples de polyuréthane de haute fermeté, à partir d'une composition moussante comprenant un polyisocyanate organique, un catalyseur, un agent d'expansion et un polyéther-polyol, le procédé étant caractérisé en ce que la composition moussante contient en outre de 0,1 à 30 % en poids par rapport au polyéther-polyol, d'une ou plusieurs résines hydroxylées à base de condensats cétone-formaldéhyde, lesdites résines présentant une température de ramollissement comprise entre 70 et 150 °C et un indice d'hydroxyle compris entre 100 et 600. De préférence la résine hydroxylée est utilisée en quantité représentant 3 à 15 % du poids du polyéther-polyol.

Les condensats cétone-formaldéhyde sont préparés par réaction à une température généralement supérieure à 60 °C et pendant des durées pouvant atteindre plusieurs heures, d'une part d'une cétone choisie dans le groupe formé par les cétones de formule Z—CO—R dans laquelle Z représente un radical aromatique mono ou polycyclique et R représente un radical aliphatique monovalent contenant de 1 à 4 atomes de carbone, la cyclohexanone non substituée et les cyclohexanones substituées par un radical R, défini ci-avant et, d'autre part, de 0,5 à 3 molécules de formaldéhyde par molécule de cétone. La condensation peut être réalisée en présence de catalyseurs tels que le carbonate de potassium, le chlorure d'ammonium, l'hydroxyde de sodium ou l'hydroxyde de potassium. De telles réactions ont par exemple été décrites par Fuson, Ross et Mc Keever dans Journal of American Chemical Society, Vol. 60, n° 12, décembre 1938, pages 2935-2936 et par Morgan, Megson et Pepper dans Journal of Society of Chemical Industry, Vol. XVI, 1938, pages 865-891. Les composés résultants sont séparés de l'eau formée au cours de la réaction, et du catalyseur, le cas échéant après neutralisation de celui-ci jusqu'à un pH compris entre 4 et 8. Les condensats précités sont avantageusement soumis à un traitement d'hydrogénation dans le but d'obtenir de solides transparents ou translucides, présentant les caractéristiques mentionnées précédemment. Ce traitement peut être effectué par exemple en solution aqueuse, en présence de noir de platine ou d'un autre catalyseur métallique. On peut se référer à l'ouvrage de Grignard (Traité de Chimie Organique — Tome II fascicule 2, pages 982 à 1017).

Dans la formule Z—CO—R, Z peut notamment représenter un radical phényle ou un radical comportant jusqu'à 3 cycles aromatiques, lesdits cycles pouvant être condensés ou reliés par une liaison simple. L'invention concerne tout particulièrement les condensats dérivés d'acétophénone et de méthylcyclohexanone.

Il doit être entendu que chacun des constituants des compositions définies ci-avant peut consister en un seul produit ou en un mélange de plusieurs produits.

Les polyéthers-polyols mis de préférence en œuvre dans le procédé de l'invention sont constitués de composés obtenus de manière connue par polyaddition d'oxyde de propylène et d'oxyde d'éthylène sur des composés à hydrogène mobile tels que l'eau ou des polyols contenant de 2 à 6 groupements hydroxyles par molécule, l'oxyde d'éthylène représentant 5 à 10 % et de préférence 10 à 30 % en poids de l'ensemble des deux oxydes d'alcoylène fixés par polyaddition.

Les polyéthers-polyols possèdent avantageusement un nombre moyen de groupements hydroxyles par molécule d'environ trois, un indice d'hydroxyle compris entre 20 et 60 et un taux de groupements hydroxyles primaires terminaux supérieur à 30 % et de préférence supérieur à 50 %.

On obtient les polyéthers-polyols possédant l'indice d'hydroxyle souhaité par polyaddition d'une quantité molaire totale d'oxyde de propylène et d'oxyde d'éthylène déterminée par rapport à la quantité molaire de composés à hydrogène mobile. La proportion de groupements hydroxyle primaire est liée à la proportion d'oxyde d'éthylène additionné par rapport à l'oxyde de propylène, ainsi qu'au mode de mise en œuvre de ces oxydes d'alcoylène ; afin d'obtenir des polyéthers-polyols dans lesquels la proportion des groupements hydroxyles primaires est supérieure à 50 %. Il est recommandé de terminer la polyaddition par de l'oxyde d'éthylène seul ou par un mélange d'oxyde d'éthylène et d'oxyde de propylène riche en oxyde d'éthylène. Les groupements hydroxyles primaires des polyéthers hydroxylés sont constitués par des groupements hydroxyles liés à un groupement méthylène $> CH_2$. La proportion de groupements hydroxyles primaires peut être mesurée par analyse physique, par exemple par résonance magnétique nucléaire (R.M.N.) du proton ou du carbone 13.

Dans ces polyéthers-polyols, chauffés par exemple entre 70 et 140 °C, on peut dissoudre sous agitation jusqu'à 30 % en poids environ et de préférence de 3 à 15 % en poids des résines hydroxylées décrites ci-dessus. La dissolution des résines est réalisée en quelques minutes ou quelques dizaines de minutes et le mélange reste limpide après refroidissement à 25 °C. On obtient ainsi une composition de polyols, dont l'indice d'hydroxyle peut varier entre 20 et 140 suivant l'indice d'hydroxyle des polyéthers-polyols, l'indice d'hydroxyle des résines hydroxylées et suivant les proportions relatives de ces constituants.

Les polyisocyanates organiques mis en œuvre dans le procédé de l'invention sont choisis parmi les polyisocyanates aromatiques tels que le tolylènediisocyanate couramment appelé TDI et utilisé commercialement sous la forme de mélanges des isomères 2-4 et 2-6, les mélanges les plus fréquemment utilisés contenant 80 % en poids ou 65 % en poids de l'isomère 2-4, le bis(isocyanato-4 phényl) méthane couramment appelé MDI et les polyphénylpolyméthylène-polyisocyanates. Le TDI et le MDI peuvent également être utilisés sous une forme brute ; le TDI brut est constitué par le produit de la réaction du phosgène sur la tolylènediamine brute contenant divers isomères et des amines condensées, tandis que le MDI brut résulte de la condensation du phosgène sur le produit non purifié de la réaction entre l'aniline et le formaldéhyde. Il est également possible de mettre en œuvre en tant que polyisocyanates organiques, des composés contenant des groupements isocyanates libres, tels que des polyisocyanates modifiés par réaction avec des composés comportant des atomes d'hydrogène actif, en particulier des tolylènediisocyanates modifiés par formation de fonction biurets, obtenus par réaction de l'eau sur le tolylènediisocyanate.

Les polyisocyanates organiques sont mis en œuvre en quantités telles que l'indice d'isocyanate, qui est égal au rapport du nombre de leurs groupements NCO à celui des atomes d'hydrogène mobile des polyéthers réactifs, du rétifiant et éventuellement de l'eau utilisée comme agent d'expansion, soit compris entre 0,7 et 1,2, et de préférence entre 0,9 et 1,1.

Les catalyseurs susceptibles d'être utilisés dans le procédé de l'invention sont essentiellement constitués par des catalyseurs aminés, notamment des amines tertiaires telles que la triéthylènediamine, la diméthyléthanolamine, la triéthylamine, la triéthanolamine, la diméthylcyclohexylamine, la diméthylaminopropylamine ou des mélanges de ces amines. Ces catalyseurs sont généralement mis en œuvre en quantités inférieures à 1 % en poids par rapport à l'ensemble des polyéthers-polyols et des résines hydroxylées.

Les agents d'expansion sont le plus souvent constitués par de l'eau, éventuellement associée à des composés organiques volatils tels que le monofluorotrichlorométhane ou le chlorure de méthylène ; l'eau est utilisée en quantités comprises entre 0,5 et 5 % en poids des polyéthers réactifs ; les composés organiques volatils peuvent être utilisés en quantités atteignant jusqu'à 25 % en poids des polyéthers-polyols et des résines hydroxylées.

Des composés conduisant à des cellules ouvertes peuvent aussi être mis en œuvre dans la fabrication des mousses selon l'invention, en proportions généralement comprises entre 0,1 et 5 % et, de préférence comprises entre 0,3 et 3 % par rapport à l'ensemble des polyéthers-polyols et des résines hydroxylées. De préférence, ces composés sont constitués d'un polyéther hydroxylé ou d'un mélange de polyéthers hydroxylés possédant un indice d'hydroxyle compris entre 10 et 20, ce polyéther hydroxylé ou ce mélange de polyéthers hydroxylés étant préparé par polyaddition, sur un ou plusieurs composés hydroxylés contenant un ou deux atomes d'hydrogène mobile, d'oxyde d'éthylène et d'oxyde de propylène, 30 à 95 % en poids des oxydes d'alcoylène fixés consistant en oxyde d'éthylène.

Les mousses souples de polyuréthane selon l'invention peuvent être fabriquées en l'absence de tout composé tensio-actif ; cependant, afin d'éviter la formation de grosses bulles à la périphérie des objets moulés, il est recommandé d'utiliser des composés siliconés d'un type particulier tel que le fluide « Rhodorsil 20679 » de la Société Rhône-Poulenc Industries, ou le composé « B 4113 » de la Société Goldschmidt.

Afin d'accroître encore la fermeté des mousses selon l'invention il est également possible d'introduire dans les compositions moussantes des rétifiants, en quantité généralement inférieure à 10 % et, de préférence, comprises entre 0,2 et 8 % en poids par rapport aux polyéthers-polyols. Les rétifiants susceptibles d'être mis en œuvre dans le procédé de l'invention sont constitués par des composés d'indice d'hydroxyle supérieur à 100, comportant au moins deux groupements fonctionnels, tels que des groupements —OH ou > NH, susceptibles de réagir avec des groupements isocyanates. Ces rétifiants peuvent par exemple être constitués de monoéthylèneglycol, de diéthylèneglycol, de butanediol-1,4, de glycérol, de triméthylolpropane, de sorbitol, de saccharose, de diéthanolamine, de triéthanolamine ou de diéthylènetriamine. Les rétifiants peuvent également être constitués par des polyéthers-polyols obtenus par condensation d'oxyde d'alcoylène sur de l'eau, des polyols, des amines ou des alcanolamines.

Le procédé de l'invention est commodément mis en œuvre selon la technique en une étape, couramment désignée par l'expression « technique one-shot », qui consiste à mélanger, en une seule opération, les polyisocyanates organiques aux autres constituants du mélange moussant. Cette technique « one-shot » est industriellement mise en œuvre au moyen d'une machine à deux ou plusieurs circuits aboutissant à une tête de mélange, l'un des circuits permettant l'introduction séparée des polyisocyanates dans la tête de mélange. La composition moussante ainsi obtenue peut être coulée dans un moule ouvert à sa partie supérieure ou sur une bande de convoyeur à déroulement continu, selon la technique de coulée dite « à expansion libre » ; elle peut également être versée dans un moule qui est ensuite fermé, afin d'obtenir un corps moulé tel qu'un rembourrage de siège de véhicule automobile ou d'ameublement.

Le procédé de l'invention convient particulièrement à la fabrication de mousses souples de polyuréthane de la catégorie des mousses dites de haute élasticité. Ces mousses sont caractérisées par le fait qu'elles se compriment d'une manière plus progressive que les mousses ordinaires sous l'influence de charges croissantes et que la relaxation s'effectue avec une hystérésis relativement faible. Ce comportement se traduit par des valeurs du coefficient connu sous le nom de « SAG Factor » d'au moins 2,5.

## Exemples

La technique de l'invention est illustrée dans les exemples 1 à 8 et dans les exemples comparatifs $C_1$ à $C_8$ ci-après.

4

Dans les exemples, on utilise des polyéthers-polyols et des compositions de polyols dont les modes de préparation et les caractéristiques sont décrites ci-après :

A. Résines hydroxylées à base de condensats cétone-formaldéhyde

Résines acétophénone-formaldéhyde

Ces résines sont préparées par chauffage entre 80 et 100 °C et sous agitation de 1 à 1,5 mole de formaldéhyde et d'une mole d'acétophénone, en présence de chlorure d'ammonium. Après traitement d'hydrogénation, on isole une résine dont l'indice d'hydroxyle ($I_{OH}$) est compris entre 250 et 320, le pH est compris entre 5,5 et 7,5 et le point de ramollissement est compris entre 110 et 120 °C.

Résines méthylcyclohexanone-formaldéhyde

Ces résines sont préparées par chauffage entre 55 et 70 °C d'une solution aqueuse de 1 à 1,5 mole de formaldéhyde et d'une mole de méthylcyclohexanone, en présence d'hydroxyde de sodium. Après hydrogénation, on isole une résine dont l'indice d'hydroxyle est compris entre 100 et 120 et le point de ramollissement est compris entre 80 et 90 °C.

B. Polyéthers-polyols

Polyéther-polyol A

Polyéther-triol, d'$I_{OH}$ 35, obtenu par polyaddition de 85 % en poids d'oxyde de propylène et de 15 % en poids d'oxyde d'éthylène sur de la glycérine. La proportion de groupements hydroxyles primaires est de 75 %.

Polyéther-polyol B

Polyéther-triol, d'$I_{OH}$ 28, obtenu par polyaddition de 85 % en poids d'oxyde de propylène et de 15 % en poids d'oxyde d'éthylène sur de la glycérine. La proportion de groupements hydroxyles primaires est de 80 %.

C. Compositions de polyols

Composition C

On dissout, sous agitation à 110 °C pendant une heure, 10 parties en poids d'une résine hydroxylée acétophénone-formaldéhyde d'$I_{OH}$ 300 et de point de ramollissement 105 °C, dans 90 parties en poids du polyéther-polyol A. Après refroidissement, la composition obtenue est limpide, de couleur jaune clair, présente un $I_{OH}$ de 61 et une viscosité à 25 °C de 2 250 mPa.s.

Composition D

On dissout, sous agitation à 110 °C pendant une heure, 5 parties en poids d'une résine hydroxylée acétophénone-formaldéhyde d'$I_{OH}$ 260 et de point de ramollissement 105 °C dans 95 parties en poids du polyéther-polyol B. Après refroidissement, la composition obtenue est limpide, de couleur jaune clair, présente un $I_{OH}$ de 40 et une viscosité à 25 °C voisine de 1 800 mPa.s.

Composition E

On dissout, sous agitation à 110 °C pendant une heure, 10 parties en poids d'une résine hydroxylée méthylcyclohexanone-formaldéhyde d'$I_{OH}$ 110 et de point de ramollissement 90 °C dans 90 parties en poids du polyéther-polyol B. Après refroidissement, la composition obtenue est limpide, de couleur jaune clair, présente un $I_{OH}$ de 36,5 et une viscosité à 25 °C voisine de 2 500 mPa.s.

D. Les autres constituants des mélanges moussants sont les suivants (marques déposées) :

« DABCO » : Diazabicyclooctane
« DABCO 33 LV » : Solution à 33 % en poids de DABCO dans du polypropylèneglycol.
« RHODORSIL Si 20679 » : Tensio-actif silicone pour mousses de haute élasticité.
« ADDITHANE X SF 135 A » : Polyéther-polyol dérivé du saccharose, d'$I_{OH}$ 400.
« ADDITHANE SF 123 A » : Additif ouvreur de cellules.
« SCURANATE BT » : TDI modifié à 39,5 % de groupements NCO en poids.
« SCURANATE MDT 40 » : Mélange de TDI pur et de MDI pur.

5

# 0 040 131

E. Formulations et résultats

Les constituants utilisés dans les formulations des exemples 1 à 8 et $C_1$ à $C_8$, ainsi que les résultats obtenus sont indiqués dans les tableaux I à IV en annexe. Les caractéristiques des mousses qui y figurent sont mesurées comme suit :

— La masse spécifique est mesurée par pesée d'un échantillon de mousse de volume déterminé.

— La portance à 50 % correspond à la pression nécessaire pour obtenir une diminution d'épaisseur relative de 50 % d'une éprouvette normalisée (Norme AFNOR T 56110).

— Le « Sac-factor » est le rapport entre la charge en cN nécessaire pour obtenir une compression de 65 % en hauteur d'une éprouvette normalisée de mousse de 10 cm × 10 cm de base et de 5 cm de hauteur et la charge en cN nécessaire pour obtenir une compression de 25 % de l'éprouvette.

— La perte de portance après fatigue dynamique est la différence relative exprimée en % entre la portance à 50 % d'une éprouvette, mesurée avant et après fatigue dynamique. La fatigue dynamique consiste à faire subir à une éprouvette normalisée 200 000 cycles de compression entre 25 % et 75 % de l'épaisseur initiale de l'éprouvette pendant une durée de 22 heures, à la température ordinaire (Norme AFNOR NF 56114).

— La perte d'épaisseur après fatigue est la perte relative d'épaisseur exprimée en %, après fatigue dynamique.

— Le « C set » est la perte relative d'épaisseur, exprimée en %, d'une éprouvette de mousse soumise à une compression de 70 %, entre deux plateaux pendant 22 heures à 70 °C (Norme AFNOR 56112).

— La charge à la rupture est la force nécessaire pour obtenir la rupture d'une éprouvette de 10 × 1,2 × 1,2 cm, étirée à une vitesse de 10 cm/mn (norme AFNOR 56108).

— L'allongement à la rupture est égal à l'accroissement de longueur en % d'un barreau de 10 cm de longueur et de 1,2 cm × 1,2 cm de section, étiré à une vitesse de 10 cm/mn, au moment de la rupture (Norme AFNOR 56108).

— La résistance à la déchirure correspond à l'effort moyen qu'il est nécessaire d'exercer pour propager une déchirure amorcée dans une éprouvette de type « pantalon » (Norme AFNOR T 56109 A).

## Exemples 1 et $C_1$

Ces exemples ont été réalisés par la technique de mélange à la turbine des constituants des compositions moussantes et coulée de ces compositions dans des moules de forme parallélipipédique, ouverts à leur partie supérieure.

L'examen des résultats obtenus montre que le procédé de l'invention permet d'obtenir, à partir de TDI 80/20, une mousse d'environ 30 kg/m³ de masse spécifique et de 30 cN/cm² de portance à 50 % ; cette mousse présente en outre des caractéristiques très favorables d'allongement et de charge à la rupture, ainsi que de résistance à la déchirure.

Dans les mêmes conditions, mais en remplaçant la composition C par du polyéther-polyol A associé à un rétifiant (Addithane XSF 135 A) on obtient dans l'exemple $C_1$ une mousse de masse spécifique sensiblement égale à celle de la mousse de l'exemple 1, mais dont les caractéristiques de portance à 50 %, d'allongement et de charge à la rupture, ainsi que de résistance à la déchirure sont nettement inférieures. Il est en outre à noter que la composition moussante de l'exemple $C_1$ présente une stabilité de gel médiocre, susceptible d'entraîner des effondrements de la mousse en cours de formation, alors que la composition moussante de l'exemple 1 ne donne lieu à aucune difficulté.

## Exemples 2 et $C_2$

Les essais ont été réalisés au moyen d'une machine d'injection du type basse pression SECMER S 330 à trois circuits : l'un pour le polyisocyanate, le second pour le monofluorotrichlorométhane et le troisième pour les autres constituants. La coulée des compositions moussantes est effectuée dans un moule qui est fermé dès que la quantité voulue de mélange moussant y a été introduite.

L'exemple $C_2$ a été réalisé à partir des mêmes constituants que l'exemple 2, à l'exception de la composition C qui a été remplacée par le polyéther-polyol A.

L'examen des résultats montre que la mousse de l'exemple 2 présente des propriétés nettement supérieures à celles de la mousse de l'exemple $C_2$ en ce qui concerne la portance à 50 %, l'allongement et la charge à la rupture, ainsi que la résistance à la déchirure.

## Exemples 3, $C_3$, 4 et $C_4$

Les essais sont réalisés de la même manière que pour les exemples 2 et $C_2$, avec des compositions de polyols et des polyisocyanates différents. Les exemples 3 et 4 montrent qu'il est possible de cette manière d'obtenir des pièces moulées d'une fermeté suffisante pour les utiliser dans le rembourrage des sièges, notamment pour l'industrie automobile.

Les essais $C_3$ et $C_4$ montrent que ce résultat n'est pas atteint lorsqu'on remplace la composition de polyol C par le polyéther-polyol A.

6

### Exemples 5 et $C_5$

Les essais sont réalisés par moulage comme dans l'exemple 2.

On montre, dans l'exemple 5, qu'il est possible de fabriquer, à partir de la composition de polyols D qui ne contient que 5 % en poids de résine hydroxylée acétophénone-formaldéhyde, une mousse sensiblement plus légère (d'environ 10 %) et néanmoins aussi ferme, qu'à partir du polyéther-polyol B. En outre, la mousse de l'exemple 5 présente des propriétés de charge et d'allongement à la rupture, ainsi que de résistance à la déchirure nettement meilleures que celle de l'exemple $C_5$, dans laquelle la composition de polyols D a été remplacée par le polyéther-polyol B.

### Exemples 6 et $C_6$

Les essais sont réalisés par moulage comme dans l'exemple 2.

On montre, dans l'exemple 6, que les compositions de polyols de l'invention, peuvent être appliquées à la fabrication de mousses légères de qualité ultrasouple, qui possèdent néanmoins de bonnes propriétés mécaniques, en particulier de résistance à la déchirure.

### Exemples 7 et $C_7$

Les essais ont été réalisés par expansion libre des compositions moussantes sur une bande transporteuse d'un convoyeur. Les compositions moussantes sont préparées dans une machine d'injection du type basse pression SECMER S 465 à cinq circuits indépendants. La comparaison des résultats des exemples 7 et $C_7$ montre qu'il est possible de fabriquer, à partir de la composition de polyols D, une mousse de portance à 50 % sensiblement plus élevée qu'à partir du polyéther-polyol B, bien que la mousse de l'exemple 7 ait une masse spécifique plus faible que celle de l'exemple $C_7$.

### Exemples 8 et $C_8$

Les essais ont été réalisés, comme pour l'exemple 1, par coulée dans des moules de forme parallélipipédique ouverts à leur partie supérieure.

L'examen des résultats obtenus montre que le procédé de l'invention permet d'obtenir, à partir de TDI 80/20, une mousse d'environ 30 kg/m$^3$ de masse spécifique et de 28 cN/cm$^2$ de portance à 50 % ; cette mousse présente en outre des caractéristiques très favorables d'allongement et de charge à la rupture, ainsi que de résistance à la déchirure.

Dans les mêmes conditions, mais en remplaçant la composition D par du polyéther-polyol C associé à des quantités plus importantes du rétifiant « Addithane XSF 135 A »[®] on obtient dans l'exemple $C_8$ une mousse de masse spécifique sensiblement égale à celle de la mousse de l'exemple 8, mais dont les caractéristiques de portance à 50 %, d'allongement et de charge à la rupture, ainsi que de résistance à la déchirure sont nettement inférieures. Il est en outre à noter que la composition moussante de l'exemple 8 présente une stabilité de gel nettement supérieure à celle de la composition moussante de l'exemple $C_8$.

(Voir Tableaux pages suivantes)

Tableau I

| Composition du mélange moussant (parties en poids) | Exemple 1 | Exemple $C_1$ | Exemple 2 | Exemple $C_2$ |
|---|---|---|---|---|
| Composition C | 100 | 0 | 100 | 0 |
| Polyéther-polyol A | 0 | 100 | 0 | 100 |
| $H_2O$ | 3 | 3 | 3 | 3 |
| DABCO® | 0,5 | 0,4 | 0 | 0 |
| DABCO 33 LV® | 0 | 0 | 1,5 | 1,5 |
| Triéthylamine | 0,075 | 0,06 | 0 | 0 |
| Diéthanolamine | 0 | 0 | 2 | 2 |
| Glycérine | 0 | 0 | 0,5 | 0,5 |
| « Rhodorsil 20679 »® | 1 | 1 | 1 | 1 |
| « Addithane XSF 135 A »® | 0 | 10 | 0 | 0 |
| « Addithane SF 123 A »® | 3 | 1 | 2 | 2 |
| Monofluorotrichlorométhane | 0 | 0 | 10 | 10 |
| TDI 80/20 | 38,8 | 40,8 | 45,4 | 42,2 |
| Indice d'isocyanate | 100 | 100 | 100 | 100 |
| **Caractéristiques du mélange moussant** | | | | |
| Temps de crème (s) | 8 | 8 | 7 | 5 |
| Temps de fil (s) | 55 | 55 | — | — |
| Temps d'expansion (s) | 70 | 65 | 70 | 65 |
| Temps hors poisse (s) | — | — | 240 | 260 |
| Température du moule (°C) | Expansion libre | | 40 | 40 |
| Temps de démoulage | | | 7 | 10 |
| **Propriétés de la mousse** | | | | |
| Masse spécifique (kg/m³) | 29,6 | 30,5 | 27 | 27 |
| Portance à 50 % (cN/cm²) | 30 | 23 | 22 | 13 |
| Portance/masse spécifique (dN(m/g)) | 1,01 | 0,75 | 0,80 | 0,48 |
| SAC Factor | — | — | 2,6 | 3 |
| Perte de portance après fatigue (%) | 10 | 8 | 10 | 5 |
| Perte d'épaisseur après fatigue (%) | — | — | 1,5 | 1,5 |
| C set après fatigue (%) | 10 | 10 | 11 | 7 |
| Charge à la rupture (cN/cm²) | 1 014 | 690 | 1 100 | 550 |
| Allongement à la rupture (%) | 210 | 150 | 170 | 120 |
| Résistance à la déchirure (cN/cm) | 450 | 230 | 200 | 120 |

Tableau II

| Composition du mélange mousssant (parties en poids) | Exemple 3 | Exemple C3 | Exemple 4 | Exemple C4 |
|---|---|---|---|---|
| Composition C | 100 | 0 | 100 | 0 |
| Polyéther-polyol A | 0 | 100 | 0 | 100 |
| $H_2O$ | 3 | 3 | 3 | 3 |
| DABCO 33 LV® | 1,5 | 1,5 | 1,5 | 1,5 |
| Diéthanolamine | 2 | 2 | 2 | 2 |
| Glycérine | 0 | 0,5 | 0 | 0 |
| « Rhodorsil 20679 »® | 1 | 1 | 1 | 1 |
| « Rhodorsil SF 123 A »® | 2 | 2 | 2 | 2 |
| Monofluorotrichlorométhane | 10 | 10 | 10 | 10 |
| « Souranate BT »® | 55 | 52,3 | 0 | 0 |
| « Souranate MT 40 »® | 0 | 0 | 52,4 | 48,2 |
| Indice d'isocyanate | 100 | 100 | 100 | 100 |
| **Caractéristiques du mélange moussant** | | | | |
| Temps de crème (s) | 8 | 7 | 7 | 6 |
| Temps de fil (s) | — | — | — | — |
| Temps d'expansion (s) | 65 | 55 | 75 | 70 |
| Temps hors poisse (s) | 180 | 160 | 110 | 110 |
| Température du moule (°C) | 40 | 40 | 35 | 35 |
| Temps de démoulage (mn) | 3 | 3 | 6 | 6 |
| **Propriétés de la mousse** | | | | |
| Masse spécifique (kg/m³) | 31 | 32 | 32,5 | 34 |
| Portance à 50 % (cN/cm²) | 42 | 26 | 30 | 17 |
| Portance/masse spécifique (dN(m/g)) | 1,35 | 0,82 | 0,92 | 0,50 |
| SAC Factor | 3 | 2,7 | 2,75 | 3 |
| Perte de portance après fatigue (%) | 12 | 10 | 10 | 3 |
| Perte d'épaisseur après fatigue (%) | 3,5 | 1 | 1,2 | 0,5 |
| C set après fatigue (%) | — | — | 9 | 5 |
| Charge à la rupture (cN/cm²) | 1 320 | 710 | 775 | 400 |
| Allongement à la rupture (%) | 120 | 105 | 95 | 80 |
| Résistance à la déchirure (cN/cm) | 245 | 150 | 150 | 85 |

Tableau III

| Composition du mélange moussant (parties en poids) | Exemple 5 | Exemple $C_5$ | Exemple 6 | Exemple $C_6$ |
|---|---|---|---|---|
| Composition D | 100 | 0 | 100 | 0 |
| Polyéther-polyol B | 0 | 100 | 0 | 100 |
| $H_2C$ | 3 | 3 | 3 | 3 |
| DABCO 33 LV® | 1,5 | 0,9 | 1,5 | 0,9 |
| Diéthanolamine | 1 | 0 | 1 | 0 |
| Diméthylaminopropylamine | 0 | 0,45 | 0 | 0,6 |
| Glycérine | 0,5 | 1,5 | 0,5 | 2 |
| « Rhodorsil 20679 »® | 1 | 1 | 1 | 1 |
| « Addithane XSF 135A »® | 0 | 10 | 0 | 5 |
| « Addithane SF 123 A »® | 0 | 3 | 0 | 0,5 |
| Monofluorotrichlorométhane | 0 | 0 | 20 | 20 |
| TDI 80/20 | 43,8 | 49,8 | 36,5 | 34,7 |
| Indice d'isocyanate | 108 | 108 | 90 | 90 |
| **Caractéristiques du mélange moussant** | — | | | |
| Temps de crème (s) | 6 | 9 | 7 | 9 |
| Temps de fil (s) | — | — | — | — |
| Temps d'expansion (s) | 50 | 75 | 65 | 85 |
| Temps hors poisse (s) | 120 | 200 | 80 | 300 |
| Température du moule (°C) | 35 | 40 | 35 | 40 |
| Temps de démoulage (mn) | 5 | 8 | 5 | 8 |
| **Propriétés de la mousse** | | | | |
| Masse spécifique (kg/m³) | 35 | 38 | 21,2 | 21,4 |
| Portance à 50 % (cN/cm²) | 30 | 30 | 6,5 | 7 |
| Portance/masse spécifique (dN(m/g)) | 0,86 | 0,79 | 0,31 | 0,33 |
| SAC Factor | 2,75 | 2,70 | 2,9 | 2,7 |
| Perte de portance après fatigue (%) | 2 | 7 | 5 | 15 |
| Perte d'épaisseur après fatigue (%) | 2 | 1 | 2 | 1,5 |
| C set après fatigue (%) | 5 | 10 | — | — |
| Charge à la rupture (cN/cm²) | 880 | 790 | 520 | 500 |
| Allongement à la rupture (%) | 160 | 110 | 200 | 200 |
| Résistance à la déchirure (cN/cm) | 190 | 130 | 180 | 150 |

# 0 040 131

Tableau IV

| Composition du mélange moussant (parties en poids) | Exemple 7 | Exemple C$_7$ | Exemple 8 | Exemple C$_8$ |
|---|---|---|---|---|
| Composition D | 100 | 0 | 0 | 0 |
| Composition E | 0 | 0 | 100 | 0 |
| Polyéther-polyol B | 0 | 100 | 0 | 100 |
| H$_2$O | 3,2 | 3,2 | 3 | 3 |
| DABCC⁻ | 0 | 0 | 0,4 | 0,4 |
| DABCO 33 LV® | 0,6 | 0,6 | 0 | 0 |
| Triéthylamine | 0 | 0 | 0,06 | 0,06 |
| Diéthanolamine | 0,5 | 0,5 | 0 | 0 |
| Diisopropylamine | 3 | 3 | 0 | 0 |
| Glycérine | 3 | 3 | 0 | 0 |
| « Rhodorsil 20679 »® | 0,5 | 0,5 | 1 | 1 |
| « Addithane XSF 135 A »® | 0 | 0 | 5 | 10 |
| « Addithane SF 123 A »® | 0 | 0 | 0 | 0 |
| Monofluorotrichlorométhane | 0 | 0 | 0 | 0 |
| TDI 80/20 | 0 | 0 | 37,8 | 40,8 |
| « Scuranate BT »® | 66 | 63,6 | 0 | 0 |
| Indice d'isocyanate | 100 | 100 | 100 | 100 |
| **Caractéristiques du mélange moussant** | | | | |
| Temps de crème (s) | 18 | 18 | 8 | 8 |
| Temps de fil (s) | 65 | 60 | 55 | 55 |
| Temps d'expansion (s) | 105 | 90 | 70 | 65 |
| Temps hors poisse (s) | — | — | 170 | 160 |
| Température du moule (°C) | Coulée continue | | Expansion libre | |
| Temps de démoulage (mn) | sur convoyeur | | | |
| Vitesse du convoyeur (m/mn) | 3,5 | 3,5 | | |
| **Propriétés de la mousse** | | | | |
| Masse spécifique (kg/m³) | 33 | 36 | 32 | 33 |
| Portance à 50 % (cN/cm²) | 53 | 43 | 28 | 22 |
| Portance/masse spécifique (dN(m/g)) | 1,60 | 1,19 | 0,875 | 0,69 |
| SAC Factor | 2,65 | 2,65 | 2,7 | 2,8 |
| Perte de portance après fatigue (%) | 18 | 12 | 10 | 12 |
| Perte d'épaisseur après fatigue (%) | 0,5 | 0,8 | 1,4 | 1,5 |
| C set après fatigue (%) | 5,5 | 5 | 8 | 10 |
| Charge à la rupture (cN/cm²) | 900 | 950 | 950 | 850 |
| Allongement à la rupture (%) | 110 | 110 | 185 | 130 |
| Résistance à la déchirure (cN/cm) | 180 | 170 | 200 | 130 |

## Revendications

1. Procédé de fabrication de mousses souples de polyuréthanne de haute fermeté à partir d'une composition moussante comprenant un polyisocyanate organique, un catalyseur, un agent d'expansion et un polyéther-polyol, caractérisé en ce que ladite composition contient en outre de 0,1 à 30 % en poids, par rapport au polyétherpolyol, d'une résine hydroxylée présentant une température de ramollissement comprise entre 70 et 150 °C et un indice d'hydroxyle compris entre 100 et 600, ladite résine hydroxylée étant constituée par un condensat résultant de la réaction du formaldéhyde avec une cétone choisie dans le groupe constitué par (a) les cétones de formule Z—CO—R dans laquelle Z représente un radical aromatique mono- ou polycyclique et R représente un radical aliphatique monovalent contenant de 1 à 4 atomes de carbone, (b) la cyclohexanone non substituée et (c) les cyclohexanones substituées par un radical R, tel que défini ci-avant, le rapport molaire formaldéhyde/cétone étant compris entre 0,5 et 3.

2. Procédé selon la revendication 1, caractérisé en ce que la quantité de résine hydroxylée représente 3 à 15 % du poids du polyéther-polyol.

11

3. Procédé selon la revendication 1, caractérisé en ce que la résine hydroxylée résulte de l'hydrogénation d'un condensat cétone-formaldéhyde tel que défini dans ladite revendication 1.

4. Procédé selon l'une quelconque des revendications 1 à 3, caractérisé en ce que les polyéthers-polyols possèdent un indice d'hydroxyle compris entre 20 et 60, un taux de groupements hydroxyles primaires supérieur à 30 % et, de préférence, supérieur à 50 %, ces polyéthers-polyols étant obtenus par polyaddition d'oxyde de propylène et d'oxyde d'éthylène sur des composés à hydrogène mobile tels que l'eau ou des polyols contenant 2 à 6 groupements hydroxyles par molécule, l'oxyde d'éthylène représentant entre 5 et 50 % et, de préférence, entre 10 et 30 % en poids de l'ensemble des deux oxydes d'alcoylène additionnés.

5. Procédé selon l'une quelconque des revendications 1 à 4, caractérisé en ce que les polyisocyanates organiques sont choisis parmi les polyisocyanates aromatiques tels que les tolylène-diisocyanates, le diphénylméthane 4-4' diisocyanate, les polyphénylpolyméthylène-polyisocyanates, les variétés brutes de ces polyisocyanates ou des composés comportant des groupements isocyanates libres dérivés de ces polyisocyanates.

6. Les compositions mises en œuvre dans le procédé selon l'une quelconque des revendications 1 à 5.

7. Les mousses de polyuréthanes résultant de la mise en œuvre du procédé selon l'une quelconque des revendications 1 à 6.

## Claims

1. A process for the preparation of flexible polyurethane foams having high solidity from a foaming composition comprising an organic polyisocyanate, a catalyst, an expansion agent and a polyether-polyol, characterized in that the said composition contains in addition 0.1 to 30 % by weight, with respect to the polyether-polyol, of a hydroxyl resin having a softening temperature between 70 and 150 °C and a hydroxyl index between 100 and 600, the said hydroxyl resin being constituted by a condensate resulting from the reaction of formaldehyde with a ketone chosen in the group constituted by (a) ketones of the formula Z—CO—R in which Z represents an aromatic mono- or poly-cyclic radical and R represents an aliphatic monovalent radical containing 1 to 4 atoms of carbon, (b) non-substituted cyclohexanone and (c) cyclohexanones substituted with a radical R, such as defined above, the molar ratio formaldehyde/ketone being between 0.5 and 3.

2. A method according to claim 1, characterized in that the quantity of hydroxyl resin represents 3 to 15 % by weight of the polyetherpolyol.

3. A process according to claim 1, characterized in that the hydroxyl resin results from hydrogenation of a ketone-formaldehyde condensate such as defined in claim 1.

4. A process according to any one of claims 1 to 3, characterized in that the polyether-polyols possess a hydroxyl index between 20 and 60, a proportion of primary hydroxyl groups greater than 30 %, and preferably greater than 50 %, these polyether-polyols being obtained by polyaddition of propylene oxide and of ethylene oxide on compounds having free hydrogen such as water or polyols containing 2 to 6 hydroxyl groups per molecule, the ethylene oxide representing between 5 and 50 % and preferably between 10 and 30 % by weight of the mixture of the two added alcoylene oxides.

5. A method according to any one of claims 1 to 4, characterized in that the organic polyisocyanates are chosen amongst the aromatic polyisocyanates such as the tolylene-diisocyanates, the 4-4' diphenylmethane diisocyanate, the polyphenylpolymethylene-polyisocyanates, unrefined polyisocyanates or compounds having free isocyanates groups derived from these polyisocyanates.

6. The compositions produced in the process according to any one of claims 1 to 5.

7. The polyurethane foams resulting from the use of the process of any one of claims 1 to 6.

## Patentansprüche

1. Verfahren zur Herstellung von flexiblen Polyurethanschäumen von hoher Festigkeit ausgehend von einer schäumenden Zusammensetzung, umfassend ein organisches Polyisocyanat, einen Katalysator, ein Treibmittel und ein Polyäther-Polyol, dadurch gekennzeichnet, daß die genannte Zusammensetzung außerdem 0,1 bis 30 Gew.%, bezogen auf das Polyäther-Polyol, eines hydroxylierten Harzes mit einer Erweichungstemperatur zwischen 70 und 150 °C und einer Hydroxylzahl zwischen 100 und 600, enthält, wobei das genannte Hydroxylharz von einem Kondensat gebildet wird, das aus der Reaktion von Formaldehyd mit einem Keton ausgewählt aus der Gruppe bestehend aus (a) den Ketonen der Formel Z—CO—R, worin Z einen aromatischen mono- oder polycyclischen Rest bedeutet und R einen einwertigen aliphatischen Rest mit 1 bis 4 C-Atomen darstellt, (b) unsubstituiertem Cyclohexanon und (c) den Cyclohexanonen, substituiert durch einen Rest R, wie oben definiert, wobei das Molverhältnis Formaldehyd/Keton zwischen 0,5 und 3 beträgt, resultiert.

2. Verfahren nach Anspruch 1, dadurch gekennzeichnet, daß der Anteil an hydroxyliertem Harz 3 bis 15 Gew.%, bezogen auf das Polyäther-Polyol, beträgt.

3. Verfahren nach Anspruch 1, dadurch gekennzeichnet, daß das hydroxylierte Harz von der Hydrierung eines Keton-Formaldehydkondensats, wie in Anspruch 1 definiert, resultiert.

4. Verfahren nach einem der Ansprüche 1 bis 3, dadurch gekennzeichnet, daß die Polyäther-Polyole eine Hydroxylzahl zwischen 20 und 60 und einen Gehalt an primären Hydroxylgruppen von mehr als 30 %, vorzugsweise mehr als 50 %, aufweisen, welche Polyäther-Polyole durch Polyaddition von Propylenoxid und Äthylenoxid an Verbindungen mit mobilem Wasserstoff, wie Wasser, oder Polyole mit 2 bis 6 Hydroxylgruppen pro Molekül, wobei das Äthylenoxid zwischen 5 und 50 Gew.%, vorzugsweise zwischen 10 und 30 Gew.% der Gesamtheit der beiden zugesetzten Alkylenoxide ausmacht, erhalten wurden.

5. Verfahren nach einem der Ansprüche 1 bis 4, dadurch gekennzeichnet, daß die organischen Polyisocyanate ausgewählt sind unter den aromatischen Polyisocyanaten, wie den Tolylendiisocyanaten, dem 4,4'-Diphenylmethandiisocyanat, den Polyphenyl-polymethylen-polyisocyanaten, den rohen Arten dieser Polyisocyanate oder den Verbindungen, die freie Isocyanatgruppen tragen und von diesen Polyisocyanaten stammen.

6. Zusammensetzungen, die im Verfahren gemäß einem der Ansprüche 1 bis 5 verwendet werden.

7. Polyurethanschäume, die von der Durchführung des Verfahrens nach einem der Ansprüche 1 bis 6 stammen.